# EUROPÄISCHE PATENTANMELDUNG

(11) **EP 4 371 640 A2**
(43) Veröffentlichungstag der Anmeldung: **22.05.2024**
(21) Anmeldenummer: 23000157.0
(22) Anmeldetag: 10.11.2023
(51) Int. Cl.: B01D 33/11, A47L 15/00, A47L 15/22, A47L 15/42, B01D 33/46

(54) **FILTERVORRICHTUNG UND DREHARMANTRIEB**

(30) Priorität: 19.11.2022 DE 102022004275
(71) Anmelder: Simmoteit, Robert, 72414 Rangendingen (DE)
(72) Erfinder: Simmoteit, Robert, 72414 Rangendingen (DE)

(57) **Zusammenfassung**

Filtervorrichtung in einer Reinigungsmaschine mit einer physikalischen Überwachungsvorrichtung, dadurch gekennzeichnet, dass eine Pumpe (26) Reinigungslösung über einen Filter (1, 15, 38) bewegt, um Dreharme (3) anzutreiben oder ein Motorantrieb (24) ein Dreharmrohr (2) antreibt um die gefilterte Reinigungslösung zu verteilen, wobei zumindest ein physikalischer Parameter der Reinigungsflüssigkeit und/oder die Dreharmgeschwindigkeit eines sauberen Filter (1, 15) mit einem benutzen Filter verglichen wird, um die daraus resultierende Änderung, hervorgerufen durch den Verschmutzungsgrad des Filters (1, 15), den Filterwechsel bestimmt.

## Beschreibung

### Gebiet der Erfindung

Die Erfindung betrifft eine Filtervorrichtung sowie einen Dreharmantrieb für eine Reinigungsmaschine im Bereich der medizinischen Produktreinigung. Dabei findet die Erfindung überall dort Anwendung, wo Produkte gereinigt werden.

### Stand der Technik

Filtervorrichtungen in Reinigungsmaschinen sowie in Maschinenwagen gehören zum Stand der Technik. Bekannt sich auch Filter in Spülmodule, um hierüber das auszuleitende Reinigungsmedium zu reinigen. Die Filterung von Reinigungslösung wird immer wichtiger, da nicht herausgefilterte Verschmutzungen die zu reinigenden Produkte belasten oder sogar zerstören können.

Zum neueren Stand der Technik gehören auch bewegbare Filter sowie in DE 255 6784A1 beschrieben. Hierbei wird das von unten her eingeleitete Reinigungsmedium über einen bewegbaren Filter gefiltert. In DE 10 2008 011 743.9 wird eine Filtervorrichtung in Verbindung mit einer Kopplungsvorrichtung in einem Etagenwagen beschrieben, wobei der Etagenwagen segmentartig aufgebaut ist. Darüber hinaus sind aus DE 102004 029 970 A1 Filter in Spülverteiler zur Reinigung von medizinischen Instrumenten bekannt. Zum Stand der Technik gehören wie in DE 10 2013 204 038 A1 Filtervorrichtungen, die endständig in einem Verteilerrohr mit Adaptern den Filterzustand mechanisch anzeigen. In den Reinigungsautomaten aller Hersteller werden bei der medizinischen Produktreinigung über ein Hauptleitungsrohr nach dem Stand der Technik alle Dreharme über den seitlichen Reinigungslösungsaustritt angetrieben. Dabei kann das Drehen der Dreharme mittels Magnete überwacht werden. Der Anteil der seitlich austretenden Reinigungslösung ist nicht unerheblich und fehlt zum Reinigen der zu waschenden Produkte.

Die beschriebene Technologie hat damit den deutlichen Nachteil, dass nicht die gesamte zur Verfügung stehende Reinigungslösung genutzt und die Filterleistung eingebrachter Filter nicht kontinuierlich und nachprüfbar überprüft wird. Diese Überprüfung ist jedoch wichtig, da der Filter seine Filterleistung über die Zeit der Anwendungsdauer verliert und daher von Zeit zu Zeit gereinigt werden muss. Ferner bieten Filterflächen im Kammerraum einer Reinigungsmaschine keine hohe Filterleistung, da hier das Reinigungsmedium nicht druckgesteuert in die Reinigungspumpe überführt wird.

### Beschreibung

Die Neuerung löst die bekannten Nachteile vorzugsweise durch eine einfach auswechselbare Filterrohrvorrichtung, die zumindest in einem Hauptleitungsrohr einer Reinigungsmaschine oder eines Maschinenwagens eingebracht ist, um die Reinigungslösung zu filtern. Es ist vorgesehen über die Dreharmfunktion und/oder über ein Sensorsystem oder Lichtschranke die Filterleistung zu analysieren, um eine Validierbarkeit und die optimale Einsatzzeit des Filters bestimmen zu können. Ferner ist sicherzustellen, dass die hierüber geführte Reinigungslösung in ausreichender Menge zur Instrumentenreinigung zur Verfügung steht und die zu reinigenden medizinischen Gerätschaften nicht durch einen Partikel- oder Faserbefall in der Funktion beeinträchtigt werden. Ganz zu schweigen davon, dass von aufbereiteten medizinischen Instrumenten keine Gefahr ausgehen darf. Die Neuerung sieht darüber hinaus einen Dreharmantrieb über ein zentrales Medienrohr vor, an dem sich Dreharme befinden.

Die Aufgabe wird erfindungsgemäß durch Filtervorrichtung in einer Reinigungsmaschine für medizinische Produkte nach Anspruch 1 und durch einen Dreharmantrieb nach Anspruch 11 gelöst. Die abhängigen Ansprüche betreffen vorteilhafte Ausgestaltungen der Erfindung.

Die Erfindung löst die Aufgabe mit einer Filtervorrichtung in einer Reinigungsmaschine mit einer physikalischen Überwachungsvorrichtung, dadurch gekennzeichnet, dass eine Pumpe Reinigungslösung über einen Filter (Filterhülse oder Pumpenfilter) bewegt um Dreharme anzutreiben oder ein Motorantrieb ein Dreharmrohr antreibt um die gefilterte Reinigungslösung zu verteilen, wobei zumindest ein physikalischer Parameter der Reinigungsflüssigkeit oder die Dreharmgeschwindigkeit eines sauberen Filter mit einem benutzen Filter verglichen wird, um die daraus resultierende Änderung, hervorgerufen durch den Verschmutzungsgrad des Filters, den Filterwechsel bestimmt.

Dabei kann vorgesehen sein, dass zumindest ein Filter (Flächenfilter oder Filterrohr) vor den Dreharmleitungen oder als Filter (vorzugsweise ein drehbarer Filter) in einem Zuleitungsrohr mit Dreharme beabstandet von einer Rohrwandung angeordnet ist, um die Dreharme mit filtrierter Reinigungslösung anzutreiben. Alternativ können die Dreharme motorgesteuert angetrieben werden und die gefilterte Reinigungslösung zu verteilen.

Die eingesetzte Überwachungsvorrichtung besteht dabei vorzugsweise aus einem Computer mit einem Computerprogramm, einem Datenspeicher und Sensoren oder aus einer elektronischen Steuerung mit Sensoren. Die Überwachungseinheit kann dabei Sensoren wie z. B. Dreharmsensoren, Drucksensoren und/oder Strömungssensoren enthalten, um durch den damit vergrößerten Datenfluss eine genauere Analyse des innenliegenden Filters vorzunehmen. Im Falle eines Motor-Dreharmantriebs kann vorgesehen sein, dass hier ein Druck- oder ein Strömungssensor im Hauptleitungsrohr an einer geeigneten Stelle oder im Filter eingesetzt ist. In diesem Fall wird vorzugsweise mit einer festgelegten Rotorgeschwindigkeit gefahren, wobei sich die innenliegende Filtervorrichtung entsprechend mit dreht. Hier analysiert ein Sensor z. B. ein Durchflusssensor die einströmende Reinigungslösung. Ist der Filter zugesetzt bzw. verunreinigt wird die Durchströmungsmenge durch den Filter entsprechend abnehmen. In der technischen Ausgestaltung sind alle Motoren einsetzbar deren Wirkprinzip auf Induktion oder Reluktanz beruht oder die mechanisch ein Zahnrad oder eine Riemenscheibe antreiben können. Vorteilhaft sind dabei Axialmotoren oder Axialflussmotoren und deren Bauweise.

Die Neuerung sieht dabei vorzugsweise eine innenliegende Filtervorrichtung vor die sich mit den Dreharmen bzw. Wascharmen mitbewegt oder eine doppelwandige flächige Filterfläche aufweist, um die Reinigungslösung zu filtern. Letztere Lösung ermöglicht eine änderbare Filterleistung in Abhängigkeit von den eingesetzten Filtergeweben. Dabei kann die Dreharmbewegung durch die eingesetzte Maschenweite des Filtergewebes beeinflusst werden. Gefilterte Medien ermöglichen ferner den Einsatz von Kugel- oder Gleitlagern in einer Reinigungsmaschine. Derartige Filtervorrichtungen werden vorzugsweise in den Maschinenwagen einer Reinigungsmaschine eingesetzt und können wiederverwendet werden. Vorgesehen sind dabei Filterzylinder oder Filterflächen in der Länge eines Hauptleitungsrohrs oder eines Dreharmrohrs.

Da die eingesetzten Filtervorrichtungen von außen nicht einsehbar sind, ist es wichtig ein Nutzungsfenster festzulegen. Da die Verschmutzung der Reinigungslösung von den zu reinigenden Instrumenten abhängt, ist es wichtig, eine intelligente und maschinenabhängige Überwachung der Filterleistung vorzunehmen. Es wurde in Untersuchungen beobachtet, dass die Belastung der Reinigungslösung mit Fasern und Partikel sehr stark ausfallen kann, so dass die eingesetzten Filter sich in einigen Fällen schnell zusetzen. Des Weiteren kann diese Belastung auch dazu führen, dass sich die enthaltenden Partikel und Fasern in den Lagern der Dreharme oder in den Durchbrüchen der Dreharme festsetzen und diese sogar verschließen können. Eine Analyse der Dreharmgeschwindigkeit ist hier eine Lösung, da die austretende Lösungsmenge von der eingesetzten Filterleitung des Filters abhängt.

Als mögliche Analysedaten kommen z. B. Impulsdaten oder Beschleunigungsdaten oder Durchflusssensordaten in Frage, wobei die ermittelten Daten mit einem Computerprogramm analysiert werden. Dabei ist vorgesehen, dass die Dreharmgeschwindigkeiten oder Daten von mehreren Sensoren von mehreren sauberen Filtern ermittelt werden und diese Daten zur Analyse der Filterverschmutzung herangezogen werden. Diese Vorgehensweise ist vorteilhaft, da es sinnvoll ist, die Dreharmgeschwindigkeit maschinenabhängig zu bestimmen. Ferner können hier mehrere Maschinen untereinander Daten austauschen, um statistisch eine bessere Unterscheidbarkeit in den Verschmutzungszuständen des Filters zu erreichen.

Es kann weiter vorgesehen sein, dass das Filterinnere herausnehmbare Stufen unterschiedlicher Größe aufweist, um insbesondere für die aufsteigende Reinigungslösung ein Hindernis herzustellen. Hindernisse im Filterraum können dazu beitragen, dass die nach oben strömende Lösungsmenge abnimmt, um so eine bessere Lösungsverteilung in die Dreharme ermöglicht. Die herausnehmbaren Stufen werden durch Bürsten, Lamellen oder ähnliche Teile gebildet und sind diese wiederum miteinander verbunden, so kann die innere Vorrichtung zumindest beim Herausziehen dazu beitragen bereits grobe Anlagerungen im Filterinneren zu entfernen. Damit kann die neuartige Filtervorrichtung bereits eine mechanische Reinigungsvorrichtung enthalten, die durch mechanische Auf- und Ab- und/oder Drehbewegungen eine Innenreinigung des Filters ermöglichen.

Die durch die Filtervorrichtung herausgedrückte Reinigungslösung kann mit Fluss- oder Drucksensoren zusätzlich überwacht sein, um auch diese Daten zur Bewertung der Filterleitung heranziehen zu können. Die beanspruchte herausnehmbare Filtervorrichtung besitzt zumindest seitliche Abstandhalter, die zumindest nach unten hin die Filtervorrichtung vorzugsweise dichtend in ein Hauptzuleitungsrohr anordnet. Die Filtervorrichtung kann als Filterrohr oder -zylinder oder als Flächenfilter ausgebildet sein. Da die Hauptleitungen ein relativ großes Innenlumen aufweisen, sollte auch die hier eingebrachte Filterfläche groß ausgebildet werden. Vorzugsweise kann eine große Filterfläche entsprechend viel Reinigungslösung in die Dreharme oder sonstigen Anschlusssysteme weiterleiten, ohne dass es zu einem zu starken Druckabfall kommt. Letzteres würde die Reinigungsleistung der Reinigungsmaschine maßgeblich beeinflussen.

Die Filtervorrichtung wird vorzugsweise von oben in ein Hauptleitungsrohr eingebracht und beabstandet in dem Rohr vor den Austrittsöffnungen der Dreharmleitungen oder Dreharme angeordnet. Sind dabei die Dreharme seitlich an einem drehbaren Rohr angebracht, so wird sich auch die im Rohr liegende Filtervorrichtung mitdrehen. Die Filtervorrichtung kann jedoch auch im Rohr liegend nach unten hin festgesetzt sein und dabei sich das Rohr um die Filtervorrichtung drehen. Insgesamt kann vorgesehen sein, dass die Filtervorrichtung eine nach unten und oben hin ausgebildete Rohrlagerung aufweist oder aufnimmt. Da die Reinigungsmaschine im wesentlichen gefilterte Reinigungslösung zur Reinigung einsetzt, können Leichtlauflager (z. B. Kugellager) eingesetzt sein, um die Dreharme und/oder die Hauptleitung zu bewegen. Letzteres verbessert die Bestimmbarkeit der Dreharmgeschwingigkeit und verbessert die Reinigungstechnik. Dreht sich dabei der Filter mit der Rohrleitung und würde das Lager verschmutzt, so würde sich das wiederum durch eine reduzierte Dreharmgeschwindigkeit bemerkbar machen.

Alternativ zu den vorherigen Dreharmantrieb, bei dem durch seitlich austretende Reinigungslösung aus den Dreharmen diese bewegt werden, wäre ein hiervon unabhängiger Antrieb sinnvoll, da beim üblichen Dreharmantrieb die Lösungsmenge zum Antrieb und damit für die Reinigung der Spülprodukte verloren geht. Um diese Lösung zu nutzen, wird ein drehbares zentrales Rohr mit abgehenden Dreh- oder Wascharmen (Dreharmrohr) vorgeschlagen, dadurch gekennzeichnet, dass zumindest ein durchgängig zentrales Dreharmrohr in einer Reinigungskammer oder einem Etagenwagen über einen Motor z. B. direkt oder mit einer Riemenscheibe oder mit Magneten oder über einen Rotorkäfig mit Stäben gedreht wird. Der eingesetzte Motor kann dabei ein Axialmotor sein. Durchgängig wird hierbei definiert als ein Dreharmrohr das vorzugsweise durch den gesamten Kammerraum oder den Innenraum eines Etagenwagens einer Reinigungsmaschine geht.

Alternativ kann ein Motor eingesetzt sein, der eine drehbare Kopplungsvorrichtung antreibt und ein nach oben bewegbares Ankopplungsteil aufweist, um hierüber eine Kopplung an ein Anschlussteil eines Etagenwagens ermöglicht und hiermit das Dreharmrohr nach dem Ankoppeln zu drehen. Denkbar ist aber auch eine direkte Dreharmkopplung über eine mechanische Dreharmfixierung, welche z. B. ein Dreharmrohr mit mehreren übereinander und beabstandeten Dreharmen so aufnimmt und fixiert, dass das Dreharmrohr vorzugsweise oben und unten gehalten wird. Die wesentliche Stabilisierung erfolgt dabei über eine festlegbare Motorkopplung. Das wiederum reduziert den Drehwiderstand, weil das Dreharmrohr dadurch nicht allein durch eine von oben kommende Gewichtskraft eines Dreharmrohres in Lagern (z. B. Gleitlagern) gehalten wird. Dies wird vorzugsweise durch eine z. B. Federkraft oder ein drehbares Kopplungsteil am Dreharmrohr ermöglicht, welche aus dem Dreharmrohr heraus noch oben und unten bewegbar ist, um hiermit eine Motorwelle formschlüssig oder dichtend festzulegen. Alternativ kann eine Kopplung durch eine Hubbewegung eine herausstellbare Antriebswelle im Dreharmrohr ermöglicht werden. Ein herausbewegbares Kopplungsteil im Dreharmrohr hat den Vorteil, weil dadurch das Dreharmrohr zum Einbau in einer Reinigungskammer oder einen Etagenwagen verlängert oder verkürzen kann. Dies wiederum ermöglicht eine einfache Entnahme des Dreharmrohres oder dessen Austausch, um z. B. einen im Rohr liegenden Filter entnehmen zu können.

In der einfachsten Ausführung befindet sich eine Riemenscheibe am Dreharmrohr oder einem drehbaren Kopplungsteil und der Riemen wiederum wird durch einen einfachen Elektromotor angetrieben. Eine technisch aufwendige Lösung wird dadurch erreicht, dass das Dreharmrohr oder das Kopplungsteil ein Stabrohrkäfig aufweist, das von einer statischen Stromspulenanordnung (Startorwicklung wie bei einem Induktionsmotor) umschlossen ist und von unten her über eine Pumpe Reinigungslösung zugeführt wird, um durch ein zu erzeugendes rotierendes Magnetfeld das Dreharmrohr oder das Kopplungsteil zu drehen. Das Kopplungsteil ist hier vorzugsweise kontaktlos ausgebildet. Alternativ wird ein Axialmotor eingesetzt. Vorteil dieses Dreharmantriebs ist, dass die Dreh- oder Wascharme auch ohne Flüssigkeit drehbar sind und die Schaumbildung keinen Einfluss mehr auf dessen Geschwindigkeit hat. In der vorgeschlagenen Dreharmvorrichtung einer Reinigungsmaschine kann das zentral geführte Dreharmrohr zumindest einen innenliegenden Filter oder ein durch gehendes Filterrohr aufweisen. Um hier die Filterleistung bestimmen zu können, wird ein Durchflusssensor vor oder in dem Filterrohr vorgeschlagen. In dieser Ausgestaltung wird das zentrale Dreharmrohr über eine innenliegende Federvorrichtung über das herausbewegte innenliegende Kopplungsteils aus dem Dreharmrohr von der Motor- oder Riemenscheibenwelle eines Elektromotors aufgenommen und hier fixiert oder gelagert. Durch Herunterdrücken des Kopplungsteils am Dreharmrohr mit dem Innenliegenden Filter, kann das Rohr aus der Waschkammer entnommen werden. Alternativ ist auch eine magnetische Kopplung denkbar, über die das Dreharmrohr aus dem unteren Lager zur Reduzierung des Drehwiderstandes, angehoben und hierüber gedreht wird.

Vorn Vorteil sind dabei Dreharmantriebe, die sich dadurch auszeichnen, dass der Motor für das Dreharmrohr sich programmgesteuert oder über elektronische Steuerung kontrolliert dreht oder ein Vor und/oder Zurückdrehen und/oder ein schnelles und langsames Drehen ermöglichen kann. Damit wird dem Reinigungsgerät ermöglicht, eine änderbare und zielgerichtetere Reinigung durchzuführen, als es bei bestehenden Reinigungsgeräten der Fall ist. Bereits ein Vor- und Zurückdrehen bei schräg geführten Reinigungsstrahlen reduziert den Spülschatten in der Maschine. Oder ein langsames Drehen erhöht die zeitlich einwirkende Reinigungslösungsmenge zur Produktreinigung oder kann die Flächenreinigung großer Flächen verbessern.

Alternativ können anstelle einer rohrförmigen Filtervorrichtung auch flächige Filtergitter in einer quadratischen Hauptleitung eingesetzt sein. Um diese aus den Leitungen entnehmen zu können, werden die Flächenfilter von einer Schiene gehalten oder liegen vorzugsweise dichtend in einer Schiene in der Hauptleitung. Flächige Filtervorrichtungen haben den Vorteil, dass diese leichter und kontrollierter zu reinigen sind. Ferner sind die Filterflächen einer visuellen Analyse der herausgefilterten Partikel oder Fasern zugänglich und bieten die Möglichkeit einer Verschmutzungsanalyse.

Die Neuerung kann Filtervorrichtung beinhalten, die aus mehreren Teilen bestehen. Dabei kann die Filtereinheit nur ein leicht auszutauschendes Filtergewebe sein, das in einem Filterkäfig oder Rahmung so aufgenommen ist, dass Abstandshalter in Ausgestaltung z. B. von U-Profilen oder Haltenute und/oder Dichtungsteile den Filter beabstandet von einer Hauptleitungswandung anordnen, um eine bessere Verteilung der gefilterten Reinigungslösung zu erreichen. Von Vorteil ist es, wenn die Teile für sich wiederverwendbar sind.

Um die Dreharmgeschwindigkeit zu ermitteln, bietet sich eine elektronische Überwachungseinheit, bestehend aus einem Sender und Empfänger an. Es sind hier eine Reihe von Verfahren wie aus der DE 103 47 835 A1 bekannt. Diese bekannte Technologie überwacht die Drehzahl von Dreharmen, die auf einem in den Waschraum, d.h. den Nassbereich, der Reinigungsmaschine einsetzbaren Waschkorb angeordnet sind, durch Sensoren, die beispielsweise Reed-Kontakte und den Dreharmen zugeordnete Magnete aufweisen. Bei jeder Umdrehung des Dreharmes werden so Impulse erzeugt, die in einer Auswerteeinrichtung auswertbar sind. Die Ausgangssignale mehrerer Sensoren können dabei als Summensignal zusammengefasst mittels der gekoppelten Spulen übertragen werden.

Abhängig vom bekannten Verfahren werden in dieser Anmeldung mit einer KI die möglichen Ereignisse wie Schaumbildung, Pumpenschübe bei unzulässiger Zuleitungsmenge oder die temperaturabhängige Reinigungsviskosität mit in die Berechnung einbezogen und über die Zeit erfasst. Dabei wird jeweils maschinenabhängig die Dreharmgeschwindigkeiten bei einem definierten Pumpendruck gemittelt und dabei die unzulässigen Ereignisse herausgerechnet. Wesentlich dabei ist, dass die Dreharmgeschwindigkeit auch von der Lagerung der Dreharme abhängt oder von der Anzahl der vorhandenen Austrittsöffnungen. Darüber hinaus kann die KI auch den Beladungszustand der Maschine wie z. B. die Anwesenheit von Holraumprodukten in die Berechnung einbinden. Da dies maschinenabhängig sein kann, ist es vorteilhaft, eine selbstlernende KI einzusetzen, um bei einem sauberen Filter einen Normalzustand zu ermitteln. Da es mit der Zeit es einem Partikel- und Fasereintrag über die Reinigungslösung kommt, werden die Filter sich mehr oder weniger zusetzen. Diese wiederum reduziert die Durchlassmenge der Reinigungslösung und damit auch die Dreharmgeschwindigkeit, da weniger Lösung zum Antrieb der Dreharme zur Verfügung steht. Damit wird der Zeitraum für den Austausch der Filtervorrichtung den real herrschenden Bedingungen und dem Anwendungsspektrum der Reinigungsmaschine angepasst. Diese ist eine andere, wenn beispielsweise orthopädische Instrumente gereinigt werden. Hier ist der Partikeleintrag groß im Vergleich zur Reinigung von Augeninstrumenten. Die Filterstandzeiten werden somit anwendungsbezogen bestimmt.

Die Neuerung ermöglicht weiter, dass beispielsweise ganzheitlich in einer Reinigungsmaschine gefilterte Reinigungslösung eingesetzt wird, beispielsweise um diese auch über Mediumverteiler (Spülblock, Spülrohr, Spülzylinder oder ähnliches) oder über Instrumenten-Adapter-Vorrichtungen ausleiten zu können. Die Sicherheit bei der Instrumentenreinigung von Hohlraumprodukten wird dadurch wesentlich erhöht. Ferner kann eine getrennte oder zusätzliche Filterung der Reinigungslösung entfallen.

Die Erfindung ermöglicht die Aufbereitung insbesondere von schwierig zu reinigenden Produktkanälen. Damit einhergehend werden die Instrumentenkanäle nicht mit belasteter Reinigungslösung durchspült. Entsprechend gilt das auch für das Trocknungsmedium, das ebenfalls über diese Filtervorrichtung geführt werden kann.

In Weiterbildung der Neuerung können an oder in der Filtervorrichtung elektronische Teile (Fluss-, Druck- oder Temperatursensoren) zur Verbesserung oder Überwachung der Produktreinigung eingesetzt sein. Insbesondere maschinenunabhängige Messkomponenten können wichtige Reinigungsparameter erfassen oder RFID-Systeme die Rückverfolgbarkeit verbessern.

Diese Ausgestaltungsmöglichkeiten verbessern insbesondere die Validierbarkeit der Vorrichtung und verbessern die Reinigungsmaschinentechnologie im Bereich der medizinischen Instrumentenreinigung. Insbesondere im Bereich einer Reluktanz- oder induktionsgesteuerten Dreharmrotation ergibt sich eine neuartige Reinigungsmaschine in der Art, dass in dieser seitlich geführten Lagerungsgestelle wird in DE502018000438.8 beschrieben optimal nutzbar sind.

Die Neuerung kann dabei ein Filteranalyseverfahren in der Art ausweisen, dass die ermittelten Dreharmgeschwindigkeiten zumindest eines Dreharms oder eines Durchflusssensors maschinenabhängig dokumentiert und kontinuierlich miteinander verglichen wird, wobei bei einem festgelegten Schwellenwert einer reduzierten Dreharmgeschwindigkeit oder reduzierten Durchflussmenge die Filtervorrichtung auszutauschen ist. Das bevorzugte hier eingesetzte Verfahren bezieht die bereits ermittelten Dreharmgeschwindigkeiten mit ein, um damit die Analysesicherheit zu erhöhen. Die Erhöhung des Pumpendrucks zur Erhöhung der zu filtrierenden Reinigungslösungsmenge ist nicht vorteilhaft, da hierdurch die Verschmutzung durch die Filtergewebe gedrückt wird.

Das eingesetzte Verfahren kann aber auch genutzt werden, um die Daten eines Maschinenparks zusammenzuführen. Durch die größere Datenmenge werden die ermittelten Dreharmdaten sicherer und erlauben indirekt eine Steuerung der Pumpenleistung in den eingesetzten Reinigungsmaschinen.

Zusammenfassend lässt sich sagen, dass die Vielseitigkeit und der Aufbau derartiger Filtervorrichtungen in Reinigungsmaschinen auch Einfluss auf die Standzeiten der eingesetzten Filter haben. Durch die Filterung der Reinigungslösung ändern sich auch die Einsatzmöglichkeiten von Maschinenwagen in Reinigungsmaschinen z. B. bei Spezialreinigungen von Augen-, Dental-, HNO- und Roboter-Instrumenten. Das wiederum erhöht die Betriebssicherheit und erlaubt einen wirtschaftlichen Betrieb von Reinigungsmaschinen.

### Einsatzgebiete und Ausführungsformen

Die Erfindung findet Anwendung bei der Reinigung von medizinischen Instrumenten und Geräten aller Art. Insbesondere die Reinigung von Hohlrauminstrumenten und komplexer Instrumente aus dem Bereich der Endoskopie, von Motorsystemen oder der Roboter-Instrumente wird dadurch sicherer.

Die Ausführungsformen der Filtervorrichtungen in Reinigungsmaschinen sind so aufgebaut, dass diese wiederverwendbar sind.

Anwendungsbeispiele und Ausgestaltungen geeigneter Filtervorrichtungen sind:
1. Vorrichtungen, die Filterzylinderrohre mit einem Lagerungsteil aufweisen.
2. Vorrichtungen mit ebenen Filterzylinderflächen, die übereinandergelegt sind und aus gleichartigen oder unterschiedlichen Gewebetypen bestehen und dadurch die Filterleistung änderbar ist.
3. Vorrichtungen mit Filter und Abstandshalterungen, um zwischen einem Filtergewebe und einer Rohrwandung einen Lösungsraum herzustellen.
4. Vorrichtungen mit Filter, die innenliegende Bürsten aufweisen, welche in einem Gestell verbaut sind und eine Filterreinigung ermöglichen.
5. Vorrichtungen mit mindestens zwei ineinander liegenden Filterrohren oder einem zentralen Pumpenfilter.
6. Vorrichtungen mit zumindest einem Sensor zur Fluss- oder Druckmessung.
7. Vorrichtungen mit einem Induktionsantrieb für ein Dreharmrohr, dass zentral in einer Kammer einer Reinigungsmaschine angeordnet ist.
8. Filtervorrichtung, bei dem das Dreharmrohr direkt oder über ein Kopplungsteil über eine Riemenscheibenvorrichtung über einen Elektromotor in Drehbewegung versetzt wird oder Teile eines Induktions- oder Reluktanzmotors ausbildet oder aufnimmt, um hierüber das Rohr zu drehen.
9. Ein Dreharmrohr mit einem enthaltenden Filter wird von einem Motor vorzugsweise kontinuierlich bewegt.
10. Das Dreharmrohr mit dem enthaltenden Filterrohr wird programmgesteuert bewegt.
11. Das Dreharmerohr besitzt eine herausbewegbare Antriebswelle oder ein Kopplungsteil mit vorzugsweise eine Fixiereinheit.
12. Dreharmrohr mit einem Kopplungsteil, welches über eine magnetische Kraft angezogen und dadurch das Dreharmrohr angehoben und gedreht wird.

Eine bevorzugte Ausgestaltung besitzt Filterflächen, die in einem Rahmen verbaut sind, um das Filtergewebe zu stabilisieren. Um eine ausreichende oder änderbare Filtervorrichtung zu ermöglichen, können die gerahmten Filterflächen zusammengestellt werden. Bei dieser Ausgestaltung werden vorzugsweise quadratische oder rechteckige Rohre als Hauptmedienleitung eingesetzt. Vorzug dieser Filtervorrichtung ist, dass die Filterflächen optimal zu reinigen sind. Ferner sind die gefilterten Partikel und Fasern gut zu sehen und deren Anordnungsmuster gibt einen Hinweis auf die Flussdynamik oder lassen Rückschlüsse auf die Umgebungsluft zu, in dem die medizinischen Instrumente oder Geräte ausgesetzt waren. War der Luftwechsel in der OP-Abteilung nicht groß genug, können sich hier Fasern der OP-Kleidung, Tupfermaterial oder Staubpartikel absetzen. Diese wiederum werden in der Reinigungsmaschine von den Instrumenten gewaschen und durch den Filter herausgefiltert. Ebene Filterflächen haben den Vorteil, dass diese nach der Reinigung auch besser visuell auf Partikel- und Faserfreiheit kontrollierbar sind. Die Kontrolle eines flächigen und einlagigen Filtergewebes erfolgt vorzugsweise im Gegenlicht.

Bei einer anderen Ausgestaltung wird ein zylindrischer Filter von oben in einer mittig positionierten Hauptleitung eingebracht. Der zylindrische Filter kann dabei einen Käfig mit beabstandet angeordneten Bürsten aufweisen, um diese Vorrichtung zur Reinigung des Filters sowie im Benutzungszustand zur besseren Medienverteilung in die Dreharme einzusetzen. In dieser Ausgestaltung besitzt die vorgeschlagene Filtervorrichtung eine integrierte Reinigungsvorrichtung.

Bei einer anderen technischen Ausgestaltung der Filtervorrichtung besitzt diese an einer zentralen Position in einem Etagenwagen einen Flusssensor mit einer integrierten Batterie. Beispielsweise kann der Flusssensor direkt im Einströmbereich der Hauptleitung einer Reinigungsmaschine angeordnet sein, um über diesen den Filterzustand überprüfen zu können. Die ermittelten Daten werden dabei vorzugsweise über Funk übermittelt.

Ein über zumindest einen Induktionsmotor oder Axialmotor angetriebenes Dreharmrohr ermöglicht eine neuartige Reinigungsmaschine in der Art, dass eine Pumpe von unten her Reinigungslösung in ein drehbares Rohr mit seitlichen Dreharmen über einer Drehkupplung überführt und dabei die heraustretende Lösungsmenge über ein Auffangbecken oder eine Auffangvorrichtung am Kammerboden einer Reinigungskammer in die Pumpe geleitet wird. Diese Reinigungsmaschine besitzt ein fest installiertes drehbares Rohr mit in Etagen angeordneten Dreh- oder Wascharmen. Hier werden links und rechts vom zentralen Rohr Gestelle mit dem zu waschenden Gut eingebracht. Vorteil: Die Entnahme kann dabei von zwei Seiten erfolgen und die Bewegung der Gestelle durch Transportbänder in der Spülkammer unterstützt sein.

Zusätzlich zur Dreharmfilterung kann auch eine Pumpenfiltervorrichtung vor bzw. nach einer Pumpe angeordnet sein, um über einen z. B. seitlich entnehmbaren Flächenfilter (Faltenfilter) die Reinigungslösung gefiltert werden. Beide Filter können sich dabei ergänzen und unterschiedliche lösungsdurchlässige Filtergewebe und Standzeiten aufweisen. Die Neuerung ermöglicht somit eine Grobfilterung und nachgeschaltet Fein- und Feistfilterung in einer Reinigungsmaschine.

Die Erfindung kann überall dort eingesetzt werden, wo zumindest medizinische Instrumente aber auch Labormaterialien gereinigt werden müssen und eine individuelle flexible Spülmodulgestaltung wirtschaftlich von Vorteil ist.

### Ausführungsbeispiele

Im Folgenden wird die Erfindung anhand von Ausführungsbeispielen im Zusammenhang mit der Zeichnung ausführlicher erläutert.
- Fig. 1: zeigt einen Teilbereich eines Einschubwagens einer Reinigungsmaschine mit einer integrierten Filtervorrichtung.
- Fig. 2: zeigt als Skizze einen zylindrischen Filter mit einer innenliegenden Bürstenvorrichtung.
- Fig. 3: zeigt einen Teilbereich einer Hauptzuleitung von Reinigungslösung mit einem herausnehmbaren Doppelfilter.
- Fig. 4: Rotierendes Dreharmrohr in einer Reinigungskammer einer Reinigungsmaschine
- Fig. 5.: Reinigungskammer mit einer motorgetriebenen Dreharmvorrichtung und Pumpenfilterung

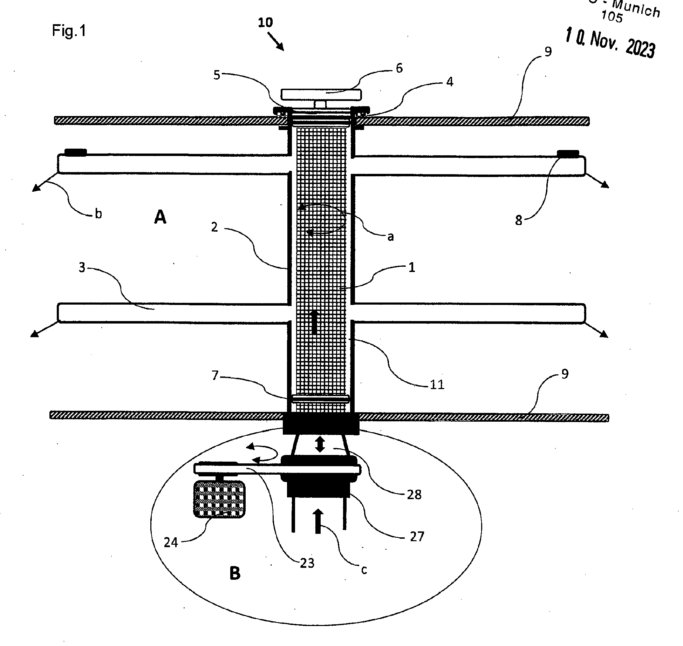

Figur 1. zeigt einen Teilbereich eines Einschubwagens einer Reinigungsmaschine mit einer integrierten Filtervorrichtung. Der dargestellte Einschubwagen 10 besitzt in A ein zentrales Dreharmohr 2 mit einem durchgehenden innenliegenden Filter 1 in dem Rohr 2. Das innenliegende Filterrohr **1** wird an definierten Stellen vorzugsweise über Dichtungen **7,** die auch Abstandshalter sind, beabstandet von der Dreharmrohrwandung positioniert. Um eine Dreharmüberwachung durchführen zu können, besitzt zumindest ein Dreharm **3** ein Dreharmsensor bzw. ein Magnet **8.** Damit sich das Dreharmrohr **2** sicher Drehen kann (dargestellt durch den **Pfeil a),** ist das Rohr zumindest nach oben hin über ein Lager **4,** das auch ein Kugellager sein kann, positioniert. Die Dreharme **3** besitzen zumindest endständige Austrittsöffnungen, um hierüber die Drehbewegung herzustellen (dargestellt durch den **Pfeil b).** Um das Filterrohr von oben einführen zu können, wird das Filterrohr **1** über ein Gewinde **5** mit dem Dreharmrohr **2** über einer handdrehbaren Drehmutter **6** verbunden. Dabei kann wie in der Darstellung **B** skizziert, von unten kommend eine drehbare Kopplungsvorrichtung **27** am Dreharmrohr **2** koppeln. Wobei die Kopplungsvorrichtung **27** durch z. B. einen Riemenantrieb **23** über einen Motor **24** drehbar ist. Dabei kann die Drehbewegung das Koppeln in der Art unterstützen, dass hierüber der Kopplungsansatz **28** nach oben und/oder nach unten heraus oder herein gedreht wird. Eine Kopplung mit dem Rohr **2** wird alternativ auch dadurch erreicht, dass der Kopplungsansatz **28** z. B. durch die Reinigungslösung von einer Pumpe kommend (siehe fetter **Pfeil c)** nach oben herausgefahren wird und so an das Dreharmrohr **2** ankoppelt. Entfällt der Lösungsdruck, fällt der Kopplungsansatz **28** wieder nach unten.

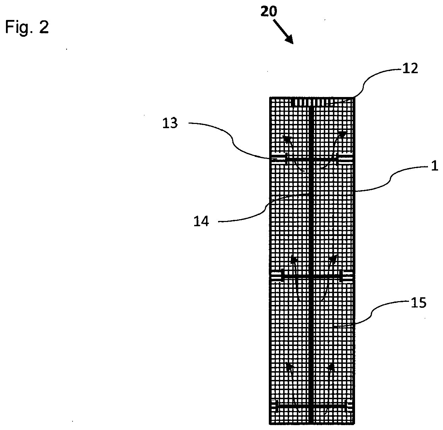

Figur 2. zeigt als Skizze einen zylindrischen Filter mit einer innenliegenden Bürstenvorrichtung. Die Filtervorrichtung **20** besitzt innenliegend ein Gestell **14,** das seitliche Bürsten **13** vorzugsweise in ringförmiger Ausgestaltung so positioniert, dass von unten herangeführte Reinigungslösung (dargestellt durch die Pfeile) nach oben hin durch einen abnehmenden Durchlass für diese Lösung ermöglicht. Das Gestell **14** kann weiter dazu genutzt werden, um das Filtergitter **15** zu reinigen. Dies wird dadurch möglich, wenn das Gestelle **14** über die obenliegende Gestellmutter **12** auf und ab sowie mit einer rotierenden Bewegung bewegt wird.

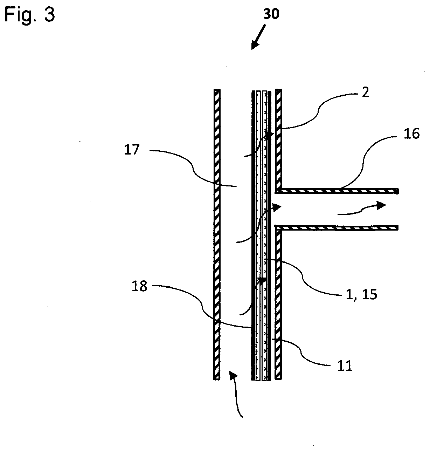

Figur 3 zeigt einen Teilbereich einer Hauptzuleitung von Reinigungslösung mit einem herausnehmbaren Doppelfilter. Die Darstellung **30** skizziert eine Filtervorrichtung, die in Ausgestaltung eines flächigen Doppelfilters **1** oder einer Filterfläche **15** ausgebildet wurde. Die aneinander liegenden Filterflächen **1** sind voneinander trennbar und ermöglichen so eine kontrollierte Filterreinigung. Dabei werden die zwei Filterflächen in einem U-Profil **18** oder Nute geführt und gehalten. Um die von unten oder von der Seite kommende Reinigungslösung zu filtern, wird diese über den Leitungsraum **17** der Hauptleitung **2** herangeführt und von hier aus über den Filter in den Zwischenraum **11** zwischen Filterfläche und Leitungswandung in die Rohrleitung **16** zum Dreharm geführt. Der Vorteil flächiger Filterflächen ist, dass hier je nach Anwendung das Filtergitter oder -gewebe **15** auf das Anwendungsspektrum angepasst werden kann. Weiterer Vorteil der Vorrichtung ist, dass die Filterflächen 1 auch von oben entnommen werden können.

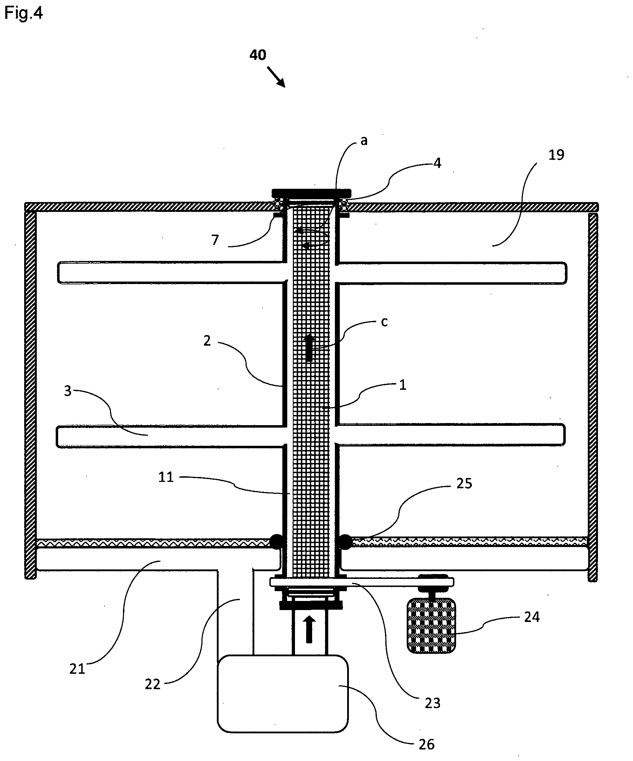

Figur 4 zeigt ein rotierendes Dreharmrohr in einer Reinigungskammer einer Reinigungsmaschine. Die Darstellung **40** zeigt vereinfacht eine Reinigungskammer **19,** welche nach unten hin ein umlaufendes Sammelbecken **21** für die Reinigungslösung besitzt. Die Reinigungskammer **19** besitzt mittig und zentral angeordnet ein durch das gesamte Kammervolumen gehendes Dreharmrohr **2** mit einem innenliegenden Filter **1.** Die Ausgestaltung derartiger Becken kann unterschiedlich sein. Das Becken **21** wird in der Regel von einem großen Grobfilter abgedeckt, damit die gröbsten Verunreinigungen entfernbar sind. Im Becken **19** wird die genutzte Reinigungslösung gesammelt und über eine Rohrleitung **22** zur Waschmaschinenpumpe **26** geführt. Dadurch entsteht ein Lösungskreislauf. In der Reinigungskammer **19** befindet sich zentral und durchgehend ein Dreharmrohr **2** das in Etagen die Dreharme **3** anordnet. Gezeigt ist, dass das Dreharmrohr **2** von unten her mit Reinigungslösung versorgt wird, einen unten liegenden Riemenantrieb **23** aufweist und dieser mit einen Elektromotor **24** bewegt wird. Anstelle des Riemenantriebs sind hier alle möglichen Motoren einsetzbar, die das zentrale Dreharmrohr **2** in Drehbewegung versetzen können. Von Vorteil kann es sein, dass das Dreharmrohr **2** in einer geeignete Dichtungen **25** drehbar gelagert ist und so eine Dichtung zum Kammerboden ausbildet. Nach oben hin kann ein Kugellager **4** die Drehbarkeit der Dreharmleitung **2** verbessern. Es versteht sich von selbst, dass anstelle eines durchgängigen Dreharmrohrs hier auch ein Dreharmrohr in einem Etagenwagen nutzbar ist, was den Vorteil hat, dass der Wagen unterschiedlich gestaltbar ist. Der dargestellte Riemenantrieb **23** kann hier ein dreharbares Kopplungsteil (siehe Figur 1) für ein Dreharmrohr sein. Hier jedoch sollte die Kupplung so ausgeführt sein, dass diese über einen Motor drehbar an den Etagenwagen ankoppeln kann, wobei sich ein Anschlussstutzen zur Kopplung von oben herausbewegt (nicht gezeigt).

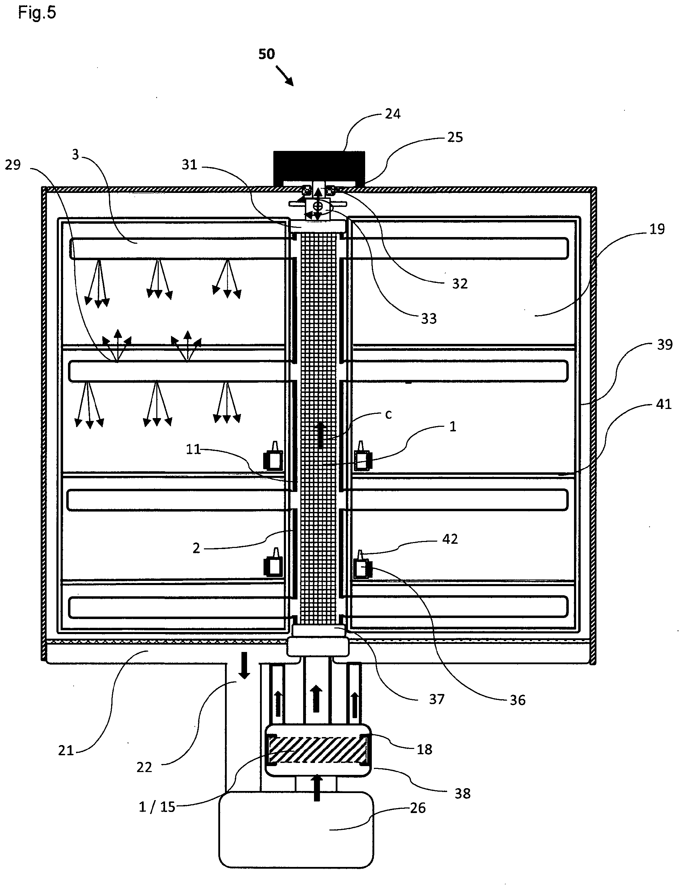

Fig. 5. Reinigungskammer mit einer motorgetriebenen Dreharmvorrichtung. In der Darstellung **50** ist eine Reinigungskammer **19** einer Reinigungsmaschine gezeigt, in der ein Dreharmrohr **2** mit einem innenliegenden Filterrohr **1** und einer weiteren unteren Pumpenfiltervorrichtung **38** mit einer innenliegenden Filterfläche **15** (vorzugsweise ein Faltenfilter zur Vergrößerung der Filterfläche) dargestellt. Dieser Filter **38** ist der Pumpe nachgeschaltet, um Lösung effektiv über den Filter **15** drücken zu können. Vorteil dieser Vorrichtung ist die einfache Entnahme, bei einer vorderen Zugangsmöglichkeit zum Pumpenraum der Maschine, sowie einer hier vorgesehenen Profillösung **18** oder alternativ einer Filterbox, die leicht zu austauschbar ist. In dieser Ausgestaltung **50** ist ein Elektromotor **24** fest mit einer Kammerwand verbunden und besitzt nach unten hin eine Antriebswelle **32.** Um das Dreharmrohr **2** mit den hier abgehenden und übereinanderliegenden Dreharmen **3** entnehmen zu können befindet sich am oberen Drehrohrende eine im Dreharmrohr **2** versengbare bzw. herausbewegbare und/oder drehbare Anschlusskopplung **33** (Dargestellt durch die Pfeile), welche vorzugsweise dichtend oder formschlüssig eine Antriebswelle **32** aufnehmen kann. Durch eine Fixierung kann dabei das Dreharmrohr **2** festgelegt werden. Nach unten hin wird das Rohr **2,** vorzugsweise nur durch ein Lager **37** in seiner senkrechten Anordnung in Position gehalten. Diese Art der Dreharmkopplung hat den Vorteil, dass man das Dreharmrohr mit einem Elektromotor direkt oder in Verbindung mit einem Riemenantrieb stabil verbinden kann und die Drehbewegung des Dreharmrohres nicht durch die Gewichtskraft behindert wird. Gleitlager auf denen eine Gewichtskraft ausgeübt wird, erhöhen den Drehwiderstand. In der Darstellung **50** ist somit eine Reinigungskammer mit einem zentral geführten Dreharmrohr dargestellt, wobei die Reinigungslösung von unten kommend über z. B. eine Pumpenfiltervorrichtung **38** in das zentrale Dreharmrohr **2** eingebracht wird. Die Dreharme **3** besitzen Lösungsaustrittsöffnungen **29** nach unten und nach oben. Diese Öffnungen sind gegeneinander nach unten und nach oben versetzt angeordnet. Vorteil der Neuerung ist das hier Einschubgestelle oder Gitterboxen **39** mit Gitterebenen **41** die links und rechts vom Dreharmrohr **2** positionierbar und wieder entnehmbar sind. Durch die gleich und übereinander angeordneten Dreharme **3** am Dreharmrohr **2** wird die Entnahme der Gitterboxen **39** erleichtert, wenn das Dreharmrohr gezielt über den Motor nach vorne hin ausgerichtet werden kann. Weiterer Vorteil ist, wenn an der hintern Kammerwandung Anschlussvorrichtung **36** oder Anschlussleitungen zur weiteren Entnahme von gefilterter Reinigungslösung vorhanden sind, um damit z.B. eine Hohlrauminstrumentenreinigung zu ermöglichen. Diese Anschlussvorrichtung **36** dringt von der Kammerwandung her in den Gitterbox-Raum ein und ermöglicht eine Entnahme von Reinigungslösung über vorhandene Adapter **42** oder über seitliche Ventilkupplungen in die steckbare Anschlussteile eingebracht werden. Der nachgeschalteter Pumpenfilter **38** ermöglicht, dass die gesamte Lösung gefiltert wird und der hier eingesetzte zentrale Filter von außen kommend gut entnehmbar ist.

### Bezugszeichenliste

- 1: Filter, Filterrohr oder Filterfläche
- 2: Dreharmrohr und/oder Hauptmedienleitung
- 3: Dreh- oder Wascharm
- 4: Lager
- 5: Gewinde
- 6: Drehmutter
- 7: Filterdichtung und/oder Abstandshalter
- 8: Magnet oder Drehsensor
- 9: Einschubwagenebene
- 11: Dreharmraum oder Zwischenraum zur Leitungswandung
- 12: Gestellmutter oder -halterung
- 13: Bürsten oder Labellen
- 14: Gestell
- 15: Filtergitter, Filtergewebe oder Faltengitter
- 16: seitliche Rohrleitung zu einem Dreharm
- 17: Leitungsraum
- 18: U-Profil, Nute oder Schiene
- 19: Reinigungskammer einer Reinigungsmaschine
- 21: Sammelbecken mit einem Grobfilter
- 22: Leitung vom Sammelbecken
- 23: Riemenantrieb für ein Dreharmrohr oder für drehbares Kopplungsteil
- 24: Elektromotor oder Motorantrieb bzw. -steuerung
- 25: Kammerdichtung
- 26: Pumpe einer Reinigungsmaschine
- 27: drehbare Kopplungsvorrichtung
- 28: herausbewegbarer Kopplungsansatz für ein Dreharmrohr
- 29: Austrittsöffnung Dreharm
- 31: obere Abdichtung Dreharmrohr
- 32: Antriebswelle oder Riemenscheibenwelle
- 33: Kopplungsteil oder -vorrichtung herausbewegbar und drehbar
- 34: herausnehmbares Korbgestell
- 35: Lagerungseben oder Gitterebenen
- 36: wandständig herausstehende Anschlussvorrichtung
- 37: Lagerung Spül- und Filterrohr
- 38: Pumpenfiltervorrichtung mit innenliegendem Filter
- 39: Einschubgestell oder Gitterbox
- 41: Lagerungsebene
- 42: Anschlussadapter

## Patentansprüche

1. Filtervorrichtung in einer Reinigungsmaschine mit einer physikalischen Überwachungsvorrichtung, **dadurch gekennzeichnet, dass** eine Pumpe (26) Reinigungslösung über einen Filter (1, 15, 38) bewegt, um Dreharme (3) anzutreiben oder ein Motorantrieb (24) ein Dreharmrohr (2) antreibt um die gefilterte Reinigungslösung zu verteilen, wobei zumindest ein physikalischer Parameter der Reinigungsflüssigkeit und/oder die Dreharmgeschwindigkeit eines sauberen Filter (1, 15) mit einem benutzen Filter verglichen wird, um die daraus resultierende Änderung, hervorgerufen durch den Verschmutzungsgrad des Filters (1, 15), den Filterwechsel bestimmt.

2. Filtervorrichtung nach Anspruch 1, **dadurch gekennzeichnet, dass** zumindest eine Filterfläche (1) vor den Dreharmleitungen (16) oder ein Filterrohr (1) in einem Zuleitungsrohr (2) mit Dreharme (3) beabstandet von einer Rohrwandung angeordnet ist oder ein Pumpenfilter (38) die Reinigungslösung filtert.

3. Filtervorrichtung nach Anspruch 1 und 2, **dadurch gekennzeichnet, dass** die Überwachungsvorrichtung aus einem Computer und einem Computerprogramm oder aus einer elektronischen Steuerung mit Sensoren besteht, um zumindest auf die Signaldaten eingesetzten Sensoren zu reagieren und/oder diese Daten zur Filteranalyse auszuwerten oder ein Computerprogramm oder eine elektronische Steuerung eingesetzt ist um einen motorbewegten Dreharmrohren (2) mit enthaltenden Filterrohren die Drehbewegung zu steuern.

4. Filtervorrichtung nach Anspruch 1 und 3, **dadurch gekennzeichnet, dass** Impuls-, Beschleunigungs- oder Durchflusssensordaten mit einem Computerprogramm analysiert werden und dabei vorgesehen ist, die Daten von mehreren sauberen Filtern (1, 15) zu ermitteln und dieser Daten zur Analyse der Filterverschmutzung herangezogen werden.

5. Filtervorrichtung nach Anspruch 1 bis 4, **dadurch gekennzeichnet, dass** diese aus ein innenliegendes Filterrohr (1) oder zwei ineinander geführten Filterrohre besteht und sich mit den Dreharmen (3) mitbewegt oder der innenliegende Filter (1) eine doppelwandige flächige Filterfläche aufweist, um eine änderbare Filterleistung in Abhängigkeit von den eingesetzten Filtergeweben zu ermöglichen oder damit die Durchflussmengen zu ändern.

6. Filtervorrichtung nach einem der vorherigen Ansprüche, **dadurch gekennzeichnet, dass** diese eine innenliegende Filterreinigungsvorrichtung (1) aufweist, welche ein Gestell (14) mit Bürsten (13) oder Lamellen zum Filtergitter (15) so anordnet, dass diese beim Herausziehen und/oder Drehen des Gestelles (14) dazu beitragen, die innenliegenden Filterflächen zu reinigen.

7. Filtervorrichtung nach einem der vorherigen Ansprüche, **dadurch gekennzeichnet, dass** der Filter (1) innenliegend herausnehmbare Stufen oder Bürsten (13) unterschiedlicher Größe aufweist, um insbesondere für die aufsteigende Reinigungslösung ein Hindernis herzustellen, damit sich die nach oben strömende Lösungsmenge ändert, um so eine bessere Lösungsverteilung in die Dreharme ermöglicht wird.

8. Filtervorrichtung nach einem der vorherigen Ansprüche, **dadurch gekennzeichnet, dass** zumindest ein flächiges Filtergitter (15) in einer Hauptleitung oder Pumpenfiltervorrichtung (38) eingesetzt ist, wobei flächige Filter (1) in einer Schiene, Nute oder U-Profil (18) in der Hauptleitung (2) oder der Pumpenfiltervorrichtung (38) geführt sind, um nach der Entnahme die Filterflächen einer visuellen Analyse der herausgefilterten Partikel oder Fasern zu ermöglichen und/oder nach der Filterflächenreinigung diese besser visuell auf Partikel- und Faserfreiheit kontrollieren zu können.

9. Filtervorrichtung nach einem der obigen Ansprüche, **dadurch gekennzeichnet, dass** diese zumindest von oben her oder seitlich entnehmbar ist, wobei der Filter (1) in U-Profile (18) oder über Abstandshalter und/oder Dichtungsteile (7) beabstandet von einer Hauptleitungswandung (2) oder in einer Pumpenfiltervorrichtung (38) angeordnet ist.

10. Filtervorrichtung nach einem der vorherigen Ansprüche, **dadurch gekennzeichnet, dass** die Filtervorrichtung im Dreharmrohr (2) elektronische Teile wie Fluss-, Druck- oder Temperatursensoren zur Überwachung der Produktreinigung aufweist oder enthält oder über RFID-Systeme die Rückverfolgbarkeit der eingesetzten Filter verbessert wird.

11. Dreharmantrieb in einer Reinigungsmaschine, bei der die Reinigungskammer (19) oder ein Etagenwagen ein drehbares und durchgängiges Dreharmrohr (2) mit abgehenden Dreharmen oder mehreren abgehenden und übereinander angeordneten Dreharmen (3) besitzt in das eine Pumpe (26) Reinigungslösung ungefiltert oder über eine Filtervorrichtung (1, 15, 38) nach einem der oberen Ansprüche zuführt, **dadurch gekennzeichnet, dass** ein Motor (24) das Dreharmrohr (2) direkt oder über eine mechanische oder magnetische Kopplungsvorrichtung antreibt.

12. Dreharmantrieb nach Anspruch 10, **dadurch gekennzeichnet, dass** der Motor (24) das Dreharmrohr (2) programmgeführt dreht, wobei die Drehbewegung kontinuierlich oder ein Vor und/oder Zurückdrehen und/oder ein schnelles und langsames Drehen ermöglicht und/oder durch ein Vor- und Zurückbewegen eine An- und Endkopplungsbewegung eines Kopplungsansatzes (28, 32) ermöglicht.

13. Dreharmantrieb nach Anspruch 10 und 11, **dadurch gekennzeichnet, dass** in der technischen Ausgestaltung insbesondere ein Elektromotor oder ein Motor (24) einsetzbar ist, deren Wirkprinzip auf Induktion oder Reluktanz beruht, wobei das Dreharmrohr (2) ein Rotorkäfig oder Magnete aufweist oder aufnimmt, um über eine magnetische Antriebskraft oder mechanisch über ein Zahnrad oder eine Riemenscheibe oder über eine drehbare Kopplungsvorrichtung (27) das Dreharmrohr (2) zu bewegen.

14. Dreharmantrieb nach Anspruch 10 bis 12, **dadurch gekennzeichnet, dass** das Dreharmrohr (2) einer Reinigungsmaschine oder eines Etagenwagens über eine Riemenscheibe oder ein Rotorkäfig oder ein Axial- oder Axialflussmotor oder induktiv gedreht wird, wobei zumindest ein nach oben bewegbares Ankopplungsteil (28, 32) einer Kopplungsvorrichtung (27, 33) mechanisch oder über eine Magnetkraft das Dreharmrohr (2) koppelt.

15. Dreharmantrieb nach einen der vorherigen Ansprüche, **dadurch gekennzeichnet, dass** zumindest eine mechanische Kopplungsvorrichtung (33) eingesetzt ist, mit der die Dreharmrohrlänge (2) änderbar und damit das Dreharmrohr entnehmbar oder austauschbar ist, wobei die Anschlussvorrichtung (33) über eine Antriebwelle (32) das Drehrohr (2) senkrecht in der Reinigungskammer (19) drehbar hält und dadurch bewegbare Lagerungsgestelle (39) in die Kammer (19) eingebracht werden können.

16. Dreharmantrieb nach einem der vorherigen Ansprüche, **dadurch gekennzeichnet, dass** ein Filteranalyseverfahren in der Art eingesetzt ist, dass die Daten maschinenabhängig dokumentiert und kontinuierlich miteinander verglichen oder Daten mehrerer Reinigungsmaschinen zusammengeführt werden, um bei einem festgelegten Schwellenwert einer reduzierten Dreharmgeschwindigkeit oder reduzierten Durchflussmenge die Filtervorrichtung auszutauschen.
